**Europäisches Patentamt**

**European Patent Office**

**Office européen des brevets**

(19)

(11) **EP 1 152 353 A1**

(12) **EUROPEAN PATENT APPLICATION**

(43) Date of publication:
**07.11.2001 Bulletin 2001/45**

(51) Int Cl.⁷: **G06F 17/60**

(21) Application number: **00126718.6**

(22) Date of filing: **05.12.2000**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **03.05.2000 US 565185**

(71) Applicant: **Hewlett-Packard Company,
A Delaware Corporation
Palo Alto, CA 94304 (US)**

(72) Inventors:
• **Hart, Michael T.
Id 83713 (US)**
• **Marquez, Adolfo Crespo, Prof.
7oC., 41018 Sevilla (ES)**
• **Blanchar, Carol J.
75 Santa Clara, CA 95051 (US)**

(74) Representative: **Schoppe, Fritz, Dipl.-Ing. et al
Schoppe, Zimmermann & Stöckeler
Patentanwälte
Postfach 71 08 67
81458 München (DE)**

(54) **Product investment evaluation system and method**

(57) A system and method for evaluating investments in quality (20) and price (30) of a product includes an evaluation of customer perception of quality and price (40,50) of the product, an assessment of customer perception of value (60) of the product based on the evaluation of customer perception of quality and price of the product, and an assessment of customer loyalty (70) to the product. As such, investments in quality and price of the product are evaluated (92) based on the assessed customer perception of value of the product and the assessed customer loyalty to the product.

Fig. 1

EP 1 152 353 A1

## Description

## The Field of the Invention

The present invention relates generally to a strategic business planning model and, more particularly, to a system and method for evaluating investments in quality and price of a product.

## Background of the Invention

Today's business environment includes rapid product changes and increased competition. As such, building customer loyalty is key to profitable growth. The only way a company can retain customer loyalty, however, is by delivering superior value. Research indicates that a customer's perception of value is a primary factor during a buying decision. Typically, a customer's perception of value is defined as quality offered at the right price. Leading companies, therefore, recognize the importance of value to their customers and that a customer's perception of value is a leading indicator of a profitable market share. Thus, performance of a company is evaluated based on what customers value. Accordingly, by acting on customers' perceptions of products and services, an organization becomes accountable for understanding customer needs.

Acting on customers' perceptions of products and services typically requires an integrated cross-functional and cross-organizational approach. Merely collecting customer information is not sufficient. For an organization to become truly accountable to its customers' needs, a dedication to customer-focused actions is required. More importantly, an organization needs to know how to offer better value than the competition by offering better quality at the same price or comparable quality at a reduced price. Furthermore, an organization needs to know how such value influences customer loyalty and, ultimately, market share and revenue.

Accordingly, a need exists for evaluating investments in quality and price of a product such that an impact of different business strategies on perception of value of the product, customer loyalty to product, and, ultimately, market share and revenue of the product can be evaluated.

## Summary of the Invention

One aspect of the present invention provides a method of evaluating investments in quality and price of a product. The method includes the steps of evaluating customer perception of quality of the product, evaluating customer perception of price of the product, assessing customer perception of value of the product based on the evaluated customer perception of quality of the product and the evaluated customer perception of price of the product, assessing customer loyalty to the product, and evaluating investments in quality of the product and in price of the product based on the assessed customer perception of value of the product and the assessed customer loyalty to the product.

In one embodiment, the method further includes the steps of establishing a probability of customer purchase of the product based on the assessed customer perception of value of the product and the assessed customer loyalty to the product, forecasting a market share of the product based on the established probability of customer purchase of the product, and calculating a revenue return for the product based on the forecasted market share of the product. In one embodiment, the method further includes the steps of maximizing the revenue return for the product by optimizing the investments in quality of the product and price of the product.

In one embodiment, the steps of evaluating customer perception of quality of the product, evaluating customer perception of price of the product, assessing customer perception of value of the product, and assessing customer loyalty to the product are performed at a predetermined time. As such, reevaluating customer perception of quality of the product, reevaluating customer perception of price of the product, reassessing customer perception of value of the product based on the reevaluated customer perception of quality of the product and the reevaluated customer perception of price of the product, and reassessing customer loyalty to the product are performed at a time after the predetermined time. Accordingly, in one embodiment, reevaluating investments in quality of the product and in price of the product based on the reassessed customer perception of value of the product and the reassessed customer loyalty to the product, reestablishing a probability of customer purchase of the product based on the reassessed customer perception of value of the product and the reassessed customer loyalty to the product, and reforecasting a market share of the product based on the reestablished probability of customer purchase of the product are also performed.

In one embodiment, the step of assessing customer loyalty to the product includes assessing at least one of customer value of the product, customer intent to repurchase the product, and customer recommendation of the product, and associating a customer loyalty index to the product based on the assessed at least one of customer value of the product, customer intent to repurchase the product, and customer recommendation of the product

In one embodiment, the step of evaluating customer perception of quality of the product includes defining a quality attribute of the product and evaluating customer perception of the quality attribute. Thus, in one embodiment, the quality attribute of the product includes at least one of performance of the product, company image of a manufacturer of the product, reliability of the product, availability of the product, life span of the product, installation of the product, customer service and support for the product, and environmental impact of the product. In one embodiment, performance of the product includes consistency of the product, and company image of the manufacturer of the product includes at least one of reputation of the manufacturer, popularity of the manufacturer, superiority of the manufacturer, innovation of the manufacturer, environmental consciousness of the manufacturer, and initiative of the manufacturer. In one embodiment, reliability of the product includes at least one of consistency of the product and operation of the product, availability of the product includes at least one of accessibility of the product and selection of the product, and installation of the product includes ease of use of the product. In one embodiment, environmental impact of the product includes at least one of recyclability of the product and use of recycled material in the product.

In one embodiment, the step of evaluating customer perception of price of the product includes defining a price attribute of the product and evaluating customer perception of the price attribute. Thus, in one embodiment, the price attribute of the product includes at least one of a purchase price of the product, an amortized cost of the product, and a discount price of the product.

Another aspect of the present invention provides a quality and price investment evaluation system for a product. The system includes a quality evaluation system which evaluates customer perception of quality of the product, a price evaluation system which evaluates customer perception of price of the product, a value assessment system which assesses customer perception of value of the product based on the customer perception of quality of the product and the customer perception of price of the product, a loyalty assessment system which assesses customer loyalty to the product, and an investment evaluation system which evaluates investments in quality of the product and price of the product based on the customer perception of value of the product and the customer loyalty to the product.

The present invention provides a system for evaluating investments in quality and price of a product such that an impact of different business strategies on market share and revenue can be evaluated. Investments in quality and price of the product, for example, can be optimized so as to maximize perception of value of the product and customer loyalty to the product and, thereby, maximize market share and revenue return for the product.

## Brief Description of the Drawings

Figure 1 is a block diagram of a product investment evaluation system according to the present invention;
Figure 2 is a diagram illustrating one exemplary embodiment of quality of a product considered in the system of Figure 1;
Figure 3 is a diagram illustrating one exemplary embodiment of price of a product considered in the system of Figure 1;
Figure 4 is a diagram illustrating one exemplary embodiment of a quality evaluation system of the system of Figure 1;
Figure 5 is a diagram illustrating one exemplary embodiment of a price evaluation system of the system of Figure 1;
Figure 6 is diagram illustrating one exemplary embodiment of a value assessment system, a loyalty assessment system, and a purchase probability establishment system of the system of Figure 1;
Figure 7 is a flow diagram illustrating one exemplary embodiment of a method of evaluating investments in quality and price of a product according to the present invention;
Figure 8 is a flow diagram illustrating one exemplary embodiment of a method of evaluating product quality in the method of Figure 7;
Figure 9 is a flow diagram illustrating one exemplary embodiment of a method of evaluating product price in the method of Figure 7; and
Figure 10 is a flow diagram illustrating one exemplary embodiment of a method of assessing customer loyalty in the method of Figure 7.

## Description of the Preferred Embodiments

In the following detailed description of the preferred embodiments, reference is made to the accompanying drawings which form a part hereof, and in which is shown by way of illustration specific embodiments in which the invention may be practiced. It is to be understood that other embodiments may be utilized and structural or logical changes may be made without departing from the scope of the present invention. The following detailed description, therefore, is not to be taken in a limiting sense, and the scope of the present invention is defined by the appended claims.

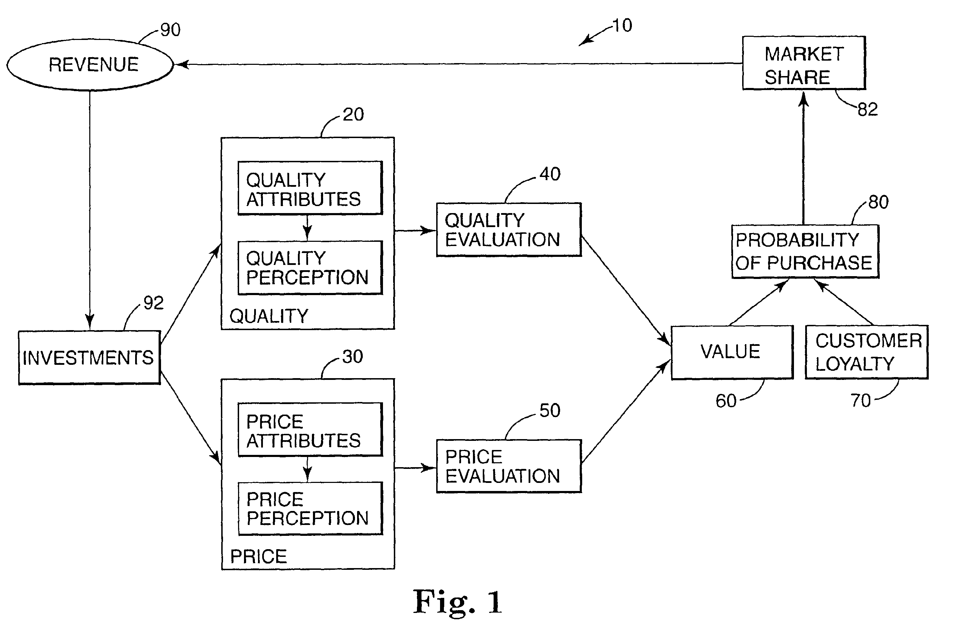

A product investment evaluation system according to the present invention is illustrated generally at 10 in Figure 1.

The product investment evaluation system 10 and other embodiments of the product investment evaluation system according to the present invention include several main components, one or more of which may be a software program. The software program components of the product investment evaluation system according to the present invention run on one or more computer or server systems. Programming languages suitable for use with the present invention will become apparent to one skilled in the art after reading the present application.

Product investment evaluation system 10 provides an assessment of value of a product to a customer based on quality 20 of the product and price 30 of the product, and an assessment of loyalty to the product by the customer. As such, product investment evaluation system 10 provides for an evaluation of investments in quality 20 and price 30 of the product. More specifically, product investment evaluation system 10 defines value as quality offered at the right price. In addition, product investment evaluation system 10 recognizes that customer perception of value of a product and customer loyalty to the product influence a probability of purchase and, therefore, market share for the product which, in turn, generates revenue. As such, revenue is invested in quality 20 of the product and price 30 of the product so as to increase customer perception of value and customer loyalty. Thus, a closed-loop analysis of quality, price, perception of value and loyalty, probability of purchase, market share, revenue return, and product investments for the product is established.

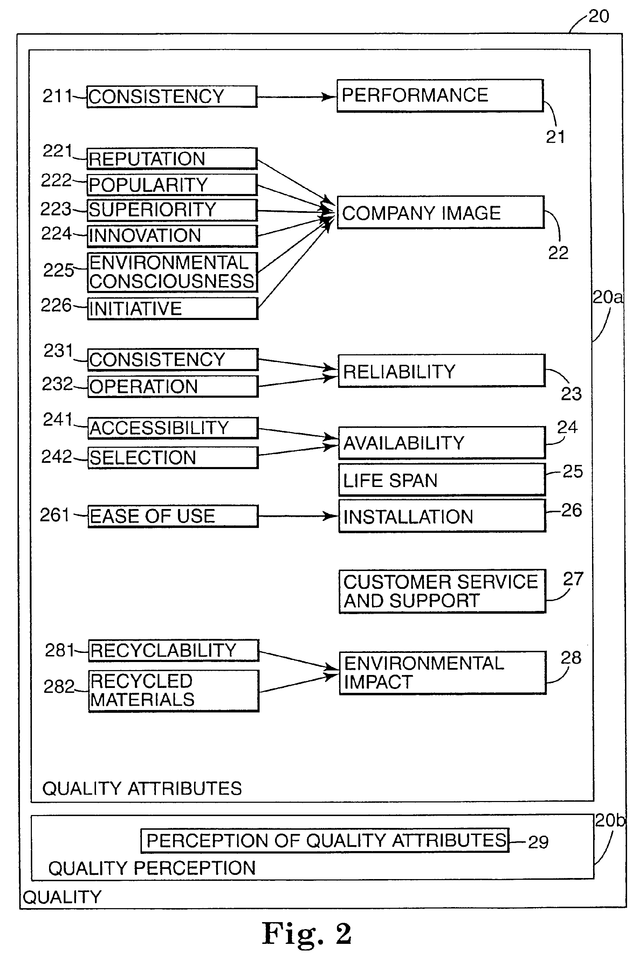

In one exemplary embodiment, as illustrated in Figure 2, quality 20 of the product includes quality attributes 20a of the product and quality perception 20b of the product. Quality attributes 20a of the product include, for example, performance 21 of the product, company image 22 of a manufacturer of the product, reliability 23 of the product, availability 24 of the product, life span 25 of the product, installation 26 of the product, customer service and support 27 for the product, and environmental impact 28 of the product. Quality perception 20b of the product includes a perception 29 of quality attributes 20a relative to competitors. While quality attributes 20a influence quality perception 20b, quality perception 20b of the product can develop independent of quality attributes 20a of the product.

In one exemplary embodiment, quality attributes 20a also include sub-attributes. More specifically, performance 21 of the product considers, for example, consistency of performance 211 of the product, and company image 22 of the manufacturer of the product considers, for example, reputation 221 of the manufacturer, popularity 222 of the manufacturer, superiority 223 of the manufacturer, innovation 224 of the manufacturer, environmental consciousness 225 of the manufacturer, and initiative 226 of the manufacturer. In addition, reliability 23 of the product considers, for example, consistency 231 of the product and operation 232 of the product, and availability 24 of the product considers, for example, accessibility 241 of the product and selection 242 of the product. Furthermore, installation 26 of the product considers, for example, ease of use 261 of the product, and environmental impact 28 of the product considers, for example, recyclability 281 of the product and use of recycled material 282 in the product.

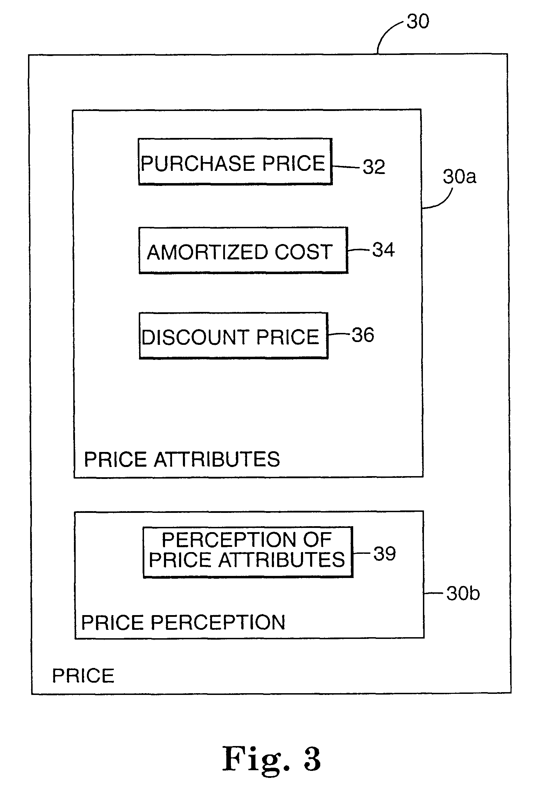

In one exemplary embodiment, as illustrated in Figure 3, price 30 of the product includes price attributes 30a of the product and price perception 30b of the product. Price attributes 30a of the product include a purchase price 32 of the product, an amortized cost 34 of the product, and a discount price 36 of the product.

Price perception 30b of the product includes a perception 39 of price attributes 30a. While price attributes 30a influence price perception 30b, price perception 30b of the product can develop independent of price attributes 30a of the product.

In one exemplary embodiment, as illustrated in Figure 1, product investment evaluation system 10 includes a product quality evaluation system 40, a product price evaluation system 50, a customer value assessment system 60, a customer loyalty assessment system 70, a probability of purchase establishment system 80, a market share forecast system 82, a revenue return calculation system 90, and a quality and price investment evaluation system 92. As such, product quality evaluation system 40 and product price evaluation system 50 provide input to customer value assessment system 60. Customer value assessment system 60 and customer loyalty assessment system 70 provide input to probability of purchase establishment system 80 which, in turn, provides input to market share forecast system 82. As such, market share forecast system 82 is input into revenue return calculation system 90 which provides input to quality and price investment evaluation system 92.

Product quality evaluation system 40 and product price evaluation system 50 evaluate quality 20 of the product and price 30 of the product, respectively, while customer value assessment system 60 assesses value of the product to the customer based on product quality evaluation system 40 and product price evaluation system 50. Customer loyalty assessment system 70, however, assesses loyalty of the customer to the product and, therefore, a manufacturer of the product. As such, probability of purchase establishment system 80 establishes a probability of purchase of the product by the customer based on the assessed value to the customer and the assessed loyalty of the customer.

Market share forecast system 82 forecasts a market share for the product based on the probability of purchase of the product by the customer, as established by probability of purchase establishment system 80. Thus, revenue return calculation system 90 calculates a corresponding revenue return for the product based on the forecasted market share, and quality and price investment evaluation system 92 evaluates investments in quality 20 of the product and price 30 of the product as funded by revenue return. More specifically, investments in quality attributes 20a and price attributes 30a, as well as quality perception 20b and price perception 30b, are evaluated. Investments in quality attributes 20a and price attributes 30a include, for example, investments in engineering and manufacturing of the product to improve quality and reduce price. Investments in quality perception 20b and price perception 30b include, for example, investments in marketing and advertising for the product to improve quality and price perceptions.

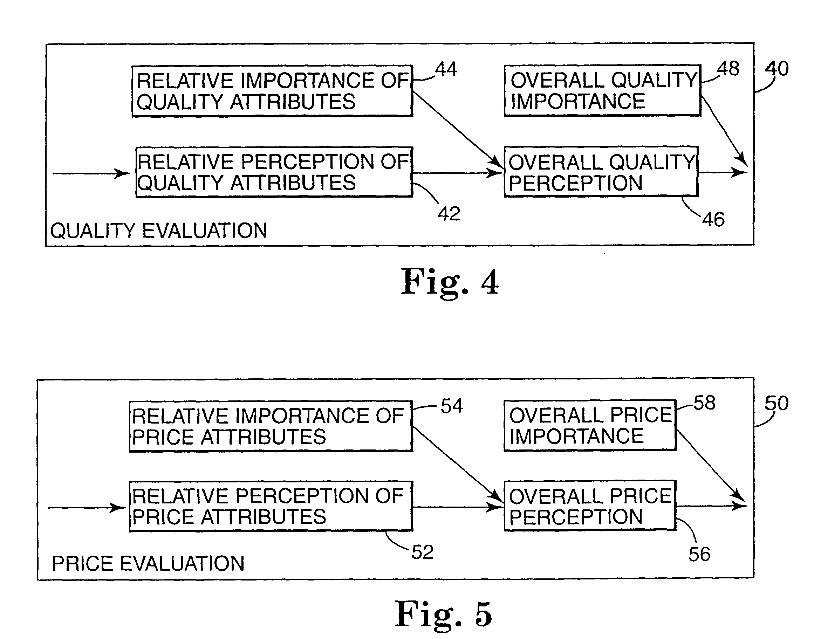

In one exemplary embodiment, as illustrated in Figure 4, product quality evaluation system 40 includes a perception 42 of quality attributes 20a of the product to the customer relative to a competing product and an importance 44 of quality attributes 20a of the product to the customer relative to each other. Relative perception 42 of quality attributes 20a and relative importance 44 of quality attributes 20a together establish an overall perception 46 of quality 20 of the product. As such, overall quality perception 46 of the product together with an overall importance 48 of quality 20 of the product to the customer establish an output of product quality evaluation system 40.

In one exemplary embodiment, as illustrated in Figure 5, product price evaluation system 50 includes a perception 52 of price attributes 30a of the product to the customer relative to the competing product and an importance 54 of price attributes 30a of the product to the customer relative to each other. Relative perception 52 of price attributes 30a and relative importance 54 of price attributes 30a together establish an overall perception 56 of price 30 of the product. As such, overall price perception 56 of the product together with an overall importance 58 of price 30 of the product to the customer establish an output of product price evaluation system 50.

Relative perceptions 42 and 52 of quality and price attributes 20a and 30a, respectively, and relative importance 44 and 54 of quality and price attributes 20a and 30a, respectively, are established by conducting a survey of customers of the product. Overall perceptions 46 and 56 of quality and price 20 and 30, respectively, and overall importance 48 and 58 of quality and price 20 and 30, respectively, are also established in a similar manner. In evaluating relative perceptions 42 and 52 of quality and price attributes 20a and 30a, respectively, for example, customers consider and rate perceptions of quality and price attributes 20a and 30a, respectively, of the product relative to one or more competing products. Customers rate perceptions of quality and price attributes 20a and 30a, respectively, by assigning numerical values, for example, on a scale of "0" (zero) to "10" (ten), to quality and price attributes 20a and 30a, respectively. In evaluating relative importance 44 and 54 of quality and price attributes 20a and 30a, respectively, customers consider and rate importance of quality and price attributes 20a and 30a, respectively, relative to each other. Customers rate importance of quality and price attributes 20a and 30a, respectively, by assigning weights, for example, in the form of percentages, to quality and price attributes 20a and 30a, respectively, such that a sum of all weights equals 100 percent.

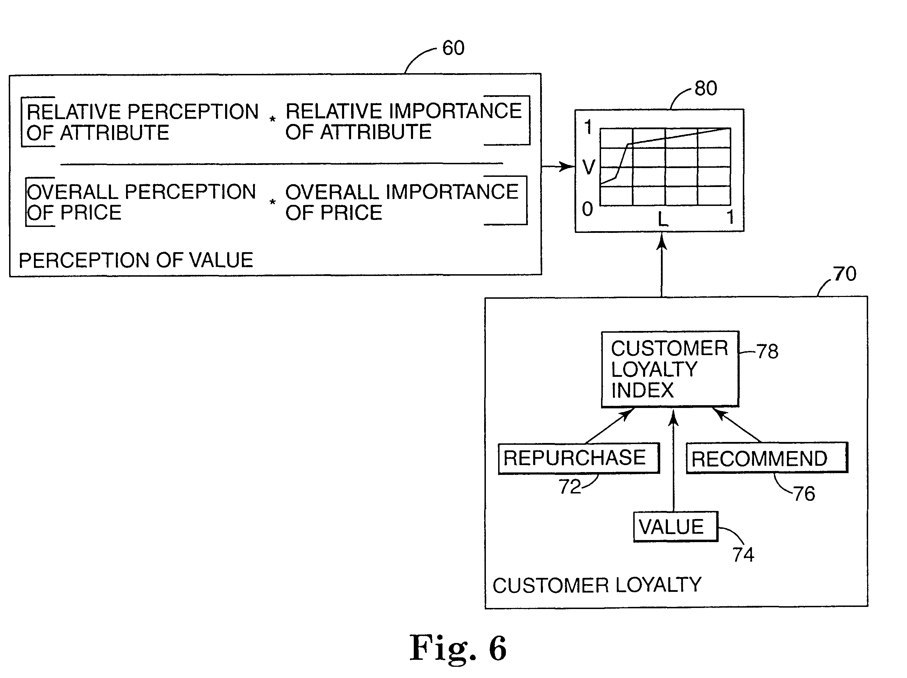

Figure 6 illustrates one exemplary embodiment of customer value assessment system 60. Customer value assessment system 60 considers a perception of value of the product to the customer. Customer perception of value is based on relative perception 42 and relative importance 44 of quality attributes 20a and/or relative perception 52 and relative importance 54 of price attributes 30a, and overall price perception 56 and overall price importance 58. More specifically, customer perception of value is represented by the following equation:

$$CPV = [P_{Ra} * I_{Ra}] / [P_{O,P} * I_{O,P}]$$

where

$P_{Ra} =$ Relative Perception of an Attribute *a* (price or quality) of the product to a customer;

$I_{Ra} =$ Relative Importance of Attribute *a* to the customer;

$P_{O,P} =$ Overall Perception of Price of the product to the customer; and

$I_{O,P} =$ Overall Importance of Price to the customer.

As such, a "score" or "utility value" for customer perception of value is computed. A relationship between customer perception of value and a probability of purchase of the product by the customer is established by probability of purchase establishment system 80.

Figure 6 also illustrates one exemplary embodiment of customer loyalty assessment system 70. Customer loyalty assessment system 70 considers an intent of the customer to repurchase 72 the product, an overall level of value 74 of the product to the customer, and a willingness of the customer to recommend 76 the product. Intent to repurchase 72, overall value 74, and willingness to recommend 76 are assessed with the assessments of product quality evaluation system 40 and product price evaluation system 50. A customer is deemed, for example, loyal, favorable, or unfavorable to the product and, therefore, the manufacturer of the product based on survey responses. As such, customer loyalty assessment system 70 establishes a customer loyalty index 78 for different market segments of a customer base. Different market segments include, for example, price conscious customers and brand-loyal customers. A relationship between customer loyalty and a probability of purchase of the product by the customer is established by probability of purchase establishment system 80.

Figure 6 also illustrates one exemplary embodiment of probability of purchase establishment system 80. Probability of purchase establishment system 80 establishes a probability of purchase of the product by the customer based on customer perception of value of the product and customer loyalty to the product. More specifically, probability of purchase of the product is based on the score or utility value derived from customer value assessment system 60 and customer loyalty index 78 derived from customer loyalty assessment system 70.

A predetermined relationship between utility value, customer loyalty index 78, and probability of purchase of the product is established, for example, based on survey responses of customers of the product. In one exemplary embodiment, the relationship is conveyed by a graph derived, for example, from established relations between a perception of value of a product, customer loyalty to the product, and a probability of purchase of the product by a customer for different market segments of a customer base. Such relations are based, for example, on survey responses of customers of the product. If, for example, a customer is deemed "loyal" based on responses to the survey, a perception of value for the customer is computed and a probability of purchase is established. Thus, probability of purchase for other customers can be deduced based on perceptions of value and customer loyalty.

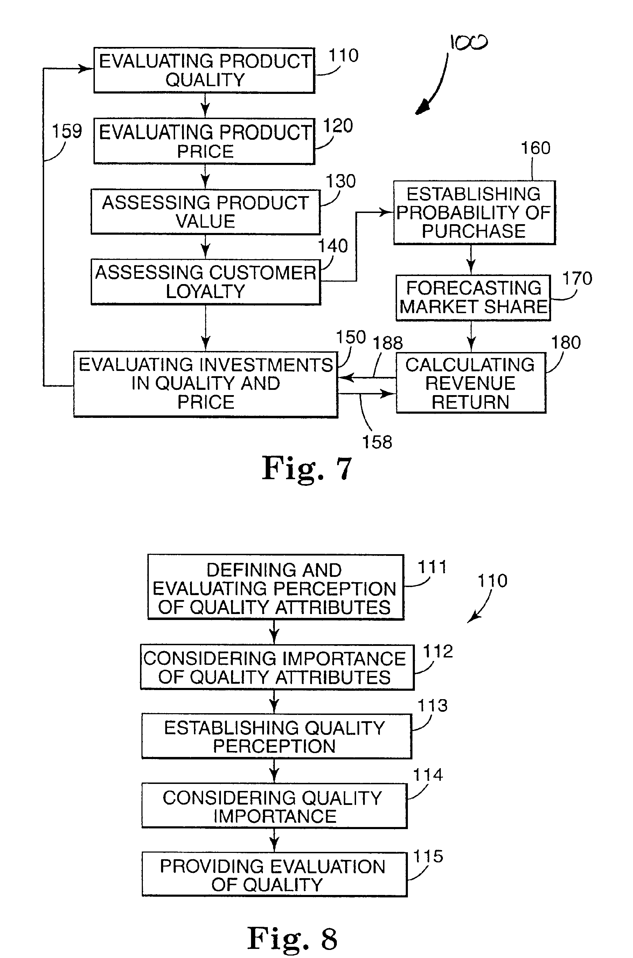

In Figure 7, a flow diagram illustrating one exemplary embodiment of a method of evaluating investments in quality 20 and price 30 of the product according to the present invention is illustrated generally at 100. Reference is also made to Figures 1-6. In step 110, quality 20 of the product is evaluated and, in step 120, price 30 of the product is evaluated. Next, in step 130, a perception of value of the product to the customer is assessed. Perception of value of the product to the customer is based on product quality 20 and product price 30 as evaluated in steps 110 and 120, respectively. Next, in step 140, loyalty of the customer to the product and, therefore, the manufacturer is assessed. Then, in step 150, investments in quality 20 and price 30 are evaluated based on perception of value and customer loyalty as assessed in steps 130 and 140, respectively. Also, in step 160, a probability of purchase of the product by the customer is established based on perception of value and customer loyalty as assessed in steps 130 and 140, respectively. Then, in step 170, a market share for the product is forecast based on probability of purchase, as assessed in step 160, and in step 180, revenue return for the product based on market share for the product, as forecasted in step 170, is calculated.

In one exemplary embodiment, investments in quality 20 and price 30, in step 150, are optimized so as to maximize revenue return, as calculated in step 180. Optimization of investments to maximize revenue return is represented by arrows 158 and 188 between steps 150 and 180. For example, by optimizing investments in quality attributes 20a, quality perception 20b, price attributes 30a, and price perception 30b, perception of value and customer loyalty can be maximized. As such, probability of purchase is maximized which, in turn, maximizes market share and revenue return.

In one exemplary embodiment, steps 110, 120, 130, 140, 150, 160, 170, and 180 are performed at a predetermined time and then performed again at a later time. Performing steps 110, 120, 130, 140, 150, 160, 170, and 180 again is represented by arrow 159 which returns to step 110 from step 150. Steps 110, 120, 130, 140, 150, 160, 170, and 180, for example, are performed on an annual or semi-annual basis to continually evaluate product quality 20 and product price 30, assess perception of value and customer loyalty, and evaluate investments in quality and price, as well as establish probability of purchase, forecast market share, and calculate revenue return. As such, effectiveness of prior evaluations of investments in quality 20 and price 30, and forecasts of market share and calculations of revenue returns are validated.

In one exemplary embodiment, as illustrated in Figure 8, evaluating quality 20 of the product in step 110 includes defining quality attributes 20a of the product and evaluating customer perception of quality attributes 20a of the product relative to a competing product, as indicated in step 111. In addition, importance of quality attributes 20a is considered in step 112. As such, overall perception of quality 20 of the product is established in step 113 based on perception evaluation of quality attributes 20a in step 111 and importance consideration of quality attributes 20a in step 112. In addition, overall importance of quality 20 of the product is considered in step 114. Thus, evaluation of quality 20 is provided in step 115 based on overall perception of quality 20 established in step 113 and overall importance of quality 20 considered in step 114.

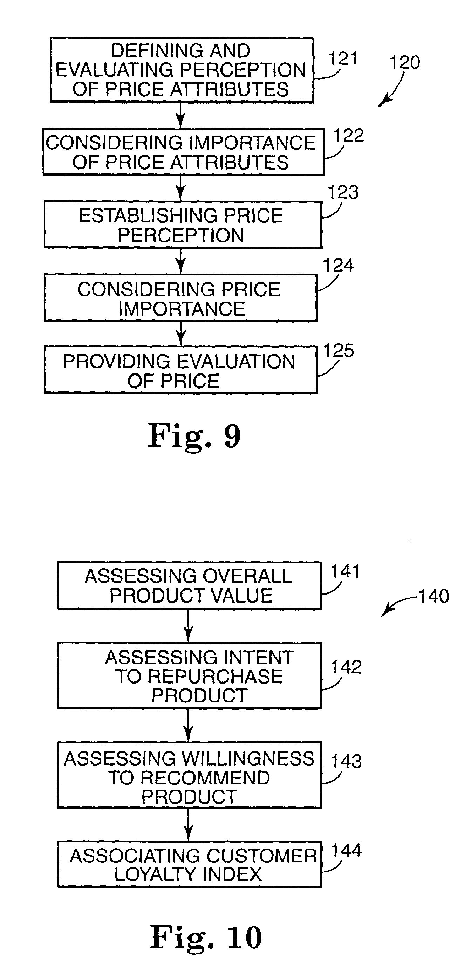

In one exemplary embodiment, as illustrated in Figure 9, evaluating price 30 of the product in step 120 includes defining price attributes 30a of the product and evaluating customer perception of price attributes 30a of the product relative to a competing product, as indicated in step 121. In addition, importance of price attributes 30a relative to each other is considered in step 122. As such, overall perception of price 30 of the product is established in step 123 based on perception evaluation of price attributes 30a in step 121 and importance consideration of price attributes 30a in step 122. In addition, overall importance of price 30 of the product is considered in step 124. Thus, evaluation of price 30 is provided in step 125 based on overall perception of price 30 established in step 123 and overall importance of price 30 considered in step 124.

Figure 10 illustrates one exemplary embodiment of assessing customer loyalty to the product as represented by step 140. In step 141, an overall level of value of the product to the customer is assessed. In addition, intent to repurchase the product by the customer is assessed in step 142 and a willingness of the customer to recommend the product is assessed in step 143. As such, in step 144, a customer loyalty index is associated with the customer based on steps 141, 142, and 143.

In one illustrative embodiment, product investment evaluation system 10 is used to assess perception of value and customer loyalty and evaluate investments in quality and price for a print cartridge for a printer. As such, quality attributes 20a and price attributes 30a of the print cartridge are defined. Sub-attributes of performance of the print cartridge include, for example, whether the print cartridge consistently produces high print quality, clear, sharp characters, and no dots, blobs, or streaks. Sub-attributes of company image of the manufacturer of the print cartridge include, for example, whether the manufacturer is well known, is technically superior, understands printing, cares about its customers, has an excellent reputation, is an industry leader, is innovative, is environmentally conscious, and stands behind its products. Sub-attributes of reliability of the print cartridge include, for example, whether the print cartridge operates perfectly until it runs out, will not damage the printer, and consistently produces high quality. Sub-attributes of availability of the print cartridge include, for example, whether the print cartridge is available where one buys other office supplies, is always in stock, and whether it is easy to select the right print cartridge for a specific printer. Sub-attributes of life span of the print cartridge include, for example, how many pages the print cartridge prints before it needs to be replaced. Sub-attributes of installation of the print cartridge include, for example, ease of installation of the print cartridge and whether installation is not messy. Sub-attributes of environmental impact of the print cartridge include, for example, whether the print cartridge is able to be recycled for its components or refilled and is made from recycled materials.

Quality 20 and price 30 of the print cartridge are evaluated with product quality evaluation system 40 and product price evaluation system 50. More specifically, a perception of quality attributes 20a of the print cartridge relative to a competing product and price attributes 30a of the print cartridge relative to the competing product are evaluated. In addition, an importance of quality attributes 20a of the print cartridge relative to each other and price attributes 30a of the print cartridge relative to each other are considered. Thus, an overall perception of quality and price of the product together with an importance of quality and importance of price to the customer, relative to each other, provide an evaluation of quality of the print cartridge and an evaluation of price of the print cartridge. As such, a perception of value of the print cartridge to the customer can be assessed. In addition, customer loyalty to the print cartridge is assessed such that a probability of purchase of the print cartridge by the customer is established. Thus, a market share for the print cartridge based on the probability of purchase is forecasted and a revenue return for the print cartridge is calculated based on the market share forecast.

Furthermore, investments in quality 20 and price 30 of the print cartridge are optimized so as to maximize revenue return for the print cartridge. Overall price perception of the print cartridge, for example, has varying influence on different market segments of a customer base. Increasing overall price perception, for example, has minimal influence on customer loyalty to the print cartridge and probability of purchase of print cartridge for price conscious and/or brand-loyal customers. Increasing overall price perception, however, does influence customer loyalty to the print cartridge and probability of purchase of the print cartridge for "worry-free" and/or "big and savvy" customers. Thus, to maximize revenue return for the print cartridge, investments in price to increase overall price perception of the print cartridge are best directed toward "worry-free" and/or "big and savvy" customers rather than price conscious and/or brand-loyal customers.

By evaluating quality and price of a product, assessing perception of value of the product and customer loyalty to the product, establishing probability of purchase of the product, and evaluating investments in quality and price of the product, as well as forecasting a market share and calculating revenue return for the product based on probability of purchase, product investment evaluation system 10 provides a closed-loop system for evaluating an impact of different business strategies on perception of value and customer loyalty and, ultimately, market share and revenue. Investments in quality and price of the product, for example, can be optimized so as to maximize perception of value and customer loyalty and, therefore, maximize market share and revenue return for the product.

Although specific embodiments have been illustrated and described herein for purposes of description of the preferred embodiment, it will be appreciated by those of ordinary skill in the art that a wide variety of alternate and/or equivalent implementations calculated to achieve the same purposes may be substituted for the specific embodiments shown and described without departing from the scope of the present invention. Those with skill in the chemical, mechanical, electromechanical, electrical, and computer arts will readily appreciate that the present invention may be implemented in a very wide variety of embodiments. This application is intended to cover any adaptations or variations of the preferred embodiments discussed herein. Therefore, it is manifestly intended that this invention be limited only by the claims and the equivalents thereof.

**Claims**

1. A method of evaluating investments in quality (20) and price (30) of a product, the method comprising the steps of:

    evaluating customer perception of quality (110) of the product;
    evaluating customer perception of price (120) of the product;
    assessing customer perception of value (130) of the product based on the evaluated customer perception of quality of the product and the evaluated customer perception of price of the product;
    assessing customer loyalty (140) to the product; and
    evaluating investments (150) in quality of the product and in price of the product based on the assessed customer perception of value of the product and the assessed customer loyalty to the product.

2. The method of claim 1, further comprising the steps of:

establishing a probability of customer purchase (160) of the product based on the assessed customer perception of value of the product and the assessed customer loyalty to the product; forecasting a market share (170) of the product based on the established probability of customer purchase of the product; and calculating a revenue return (180) for the product based on the forecasted market share of the product.

3. The method of claim 2, further comprising the step of:

maximizing the revenue return for the product by optimizing the investments in quality of the product and in price of the product.

4. The method of claim 1, wherein the step of assessing customer loyalty to the product includes assessing at least one of customer value (141) of the product, customer intent to repurchase (142) the product, and customer recommendation (143) of the product, and associating a customer loyalty index (144) to the product based on the assessed at least one of customer value of the product, customer intent to repurchase the product, and customer recommendation of the product.

5. The method of claim 1, wherein the step of evaluating customer perception of quality of the product includes defining a quality attribute of the product and evaluating customer perception of the quality attribute (111).

6. The method of claim 5, wherein the quality attribute of the product includes at least one of performance (21) of the product, company image (22) of a manufacturer of the product, reliability (23) of the product, availability (24) of the product, life span (25) of the product, installation (26) of the product, customer service and support (27) for the product, and environmental impact (28) of the product.

7. The method of claim 1, wherein the step of evaluating customer perception of price of the product includes defining a price attribute of the product and evaluating customer perception of the price attribute (121).

8. The method of claim 7, wherein the price attribute of the product includes at least one of a purchase price (32) of the product, an amortized cost (34) of the product, and a discount price (36) of the product.

9. A quality and price investment evaluation system (10) for a product, comprising:

a quality evaluation system (40) which evaluates customer perception of quality of the product; a price evaluation system (50) which evaluates customer perception of price of the product; a value assessment system (60) which assesses customer perception of value of the product based on the customer perception of quality of the product and the customer perception of price of the product; a loyalty assessment system (70) which assesses customer loyalty to the product; and an investment evaluation system (92) which evaluates investments in quality of the product and in price of the product based on the customer perception of value of the product and the customer loyalty to the product.

10. The system of claim 9, further comprising:

a purchase probability establishment system (80) which establishes a probability of customer purchase of the product based on the customer perception of value of the product and the customer loyalty to the product; a market share forecast system (82) which forecasts a market share of the product based on the probability of customer purchase of the product; and a revenue return calculation system (90) which calculates a revenue return for the product based on the market share of the product.

11. The system of claim 10, wherein the investment evaluation system and the revenue return calculation system optimize the investments in quality of the product and in price of the product to maximize the revenue return for the product.

12. The system of claim 9, wherein the loyalty assessment system assesses at least one of customer value (74) of the product, customer intent to repurchase (72) the product, and customer recommendation (76) of the product, and associates a customer loyalty index (78) to the product based on the assessed at least one of customer value of the product, customer intent to repurchase the product, and customer recommendation of the product.

13. The system of claim 9, wherein the quality evaluation system evaluates customer perception of a quality attribute (20a) of the product.

**14.** The system of claim 13, wherein the quality attribute of the product includes at least one of performance (21) of the product, company image (22) of a manufacturer of the product, reliability (23) of the product, availability (24) of the product, life span (25) of the product, installation (26) of the product, customer service and support (27) for the product, and environmental impact (28) of the product.

**15.** The system of claim 9, wherein the price evaluation system evaluates customer perception of a price attribute (30a) of the product.

**16.** The system of claim 15, wherein the price attribute of the product includes at least one of a purchase price (32) of the product, an amortized cost (34) of the product, and a discount price (36) of the product.

Fig. 1

Fig. 2

30

PURCHASE PRICE —32

30a

AMORTIZED COST —34

DISCOUNT PRICE —36

PRICE ATTRIBUTES

PERCEPTION OF
PRICE ATTRIBUTES —39

30b

PRICE PERCEPTION

PRICE

## Fig. 3

| RELATIVE IMPORTANCE OF QUALITY ATTRIBUTES 44 | OVERALL QUALITY IMPORTANCE 48 40 |
| RELATIVE PERCEPTION OF QUALITY ATTRIBUTES | OVERALL QUALITY PERCEPTION |

QUALITY EVALUATION

42

46

## Fig. 4

| RELATIVE IMPORTANCE OF PRICE ATTRIBUTES 54 | OVERALL PRICE IMPORTANCE 58 50 |
| RELATIVE PERCEPTION OF PRICE ATTRIBUTES | OVERALL PRICE PERCEPTION |

PRICE EVALUATION

52

56

## Fig. 5

Fig. 6

EVALUATING PRODUCT QUALITY — 110

159

EVALUATING PRODUCT PRICE — 120

ASSESSING PRODUCT VALUE — 130

ASSESSING CUSTOMER LOYALTY — 140

100

160 — ESTABLISHING PROBABILITY OF PURCHASE

170 — FORECASTING MARKET SHARE

150 188 — EVALUATING INVESTMENTS IN QUALITY AND PRICE

180 — CALCULATING REVENUE RETURN

158

**Fig. 7**

DEFINING AND EVALUATING PERCEPTION OF QUALITY ATTRIBUTES — 111

110

CONSIDERING IMPORTANCE OF QUALITY ATTRIBUTES — 112

ESTABLISHING QUALITY PERCEPTION — 113

CONSIDERING QUALITY IMPORTANCE — 114

PROVIDING EVALUATION OF QUALITY — 115

**Fig. 8**

Fig. 9

Fig. 10

**European Patent Office**

**DECLARATION**

which under Rule 45 of the European Patent Convention shall be considered, for the purposes of subsequent proceedings, as the European search report

Application Number EP 00 12 6718

| The Search Division considers that the present application, does not comply with the provisions of the EPC to such an extent that it is not possible to carry out a meaningful search into the state of the art on the basis of all claims | CLASSIFICATION OF THE APPLICATION (Int.Cl.7) |
|---|---|
| Reason: | G06F17/60 |

The subject-matter claimed in claims 1-8 falls under the provisions of Article 52(2) and (3) EPC, such subject-matter relating to a method of doing business as such.

Claims 9-16 relate to commonplace technological features for performing the business method of the method claims. Although these claims do not literally belong to the method category, they essentially claim protection for the same commercial effect as the method claims. With reference to the Guidelines, B-VIII, points 1-6, the Search Division considers that searching such commercial features would serve no useful purpose. This applies to the remaining commonplace technological features of these claims as well.

The applicant's attention is drawn to the fact that a search may be carried out during examination following a declaration of no search under Rule 45 EPC, should the problems which led to the declaration being issued be overcome (see EPC Guideline C-VI, 8.5).

| Place of search | Date | Examiner |
|---|---|---|
| THE HAGUE | 20 August 2001 | Pedersen, N |